Europäisches Patentamt

European Patent Office

Office européen des brevets

(11) Publication number: **0 087 945**
**B1**

## (12) EUROPEAN PATENT SPECIFICATION

(45) Date of publication of patent specification: **27.05.87**

(21) Application number: **83301000.2**

(22) Date of filing: **25.02.83**

(51) Int. Cl.⁴: **G 06 F 3/03,** G 05 B 19/42

(54) **Method and apparatus for setting coordinate system.**

(30) Priority: **27.02.82 JP 31496/82**

(43) Date of publication of application:
**07.09.83 Bulletin 83/36**

(45) Publication of the grant of the patent:
**27.05.87 Bulletin 87/22**

(84) Designated Contracting States:
**CH DE FR GB LI**

(56) References cited:
**US-A-4 042 866**

**IBM TECHNICAL DISCLOSURE BULLETIN, vol. 18, no. 5, October 1975, pages 1589-1592, New York, US. P. L. GARDNER et al.: "Paper menus and keyboards for digitizing tablets"**

**NEW HORIZONS FOR MANUFACTURING PROCEEDINGS OF THE NUMERICAL CONTROL SOCIETY OF THE 16th ANNUAL MEETING AND TECHNICAL CONFERENCE HELD ON MARCH 25-28 1979, Marritt Hotel, Los Angeles, California, N.C.S. 1979, pages 56-71, Spring Lake, US. D. C. BERAN: "Numerical control programming via computer graphics"**

(73) Proprietor: **FANUC LTD**
**3580, Shibokusa Aza-Komanba Oshino-mura Minamitsuru-gun Yamanashi 401-05 (JP)**

(72) Inventor: **Kishi, Hajimu**
**Hinohirayamadai-Jutaku 1104 6-7-8 Asahigaoka Hino-shi Tokyo (JP)**
Inventor: **Seki, Masaki**
**3-15-2-406, Takaidonishi Suginami-ku Tokyo (JP)**
Inventor: **Tanaka, Kunio**
**Nishihachioji-Haitsu C-7-9, 711 Sandahigashi-cho Hachioji-shi Tokyo (JP)**

(74) Representative: **Billington, Lawrence Emlyn et al**
**HASELTINE LAKE & CO Hazlitt House 28 Southampton Buildings Chancery Lane London WC2A 1AT (GB)**

# 0 087 945

## Description

The present invention relates to a method and apparatus for preparing an NC tape for a numerically controlled machine tool.

A numerically controlled machine tool (hereafter referred to as an NC machine tool) is operated in a manner specified by a machining program stored on an NC tape to subject a workpiece to prescribed machining. To create an NC tape for a cutting operation, numerical control information and other machining conditions are punched into a paper tape in accordance with predetermined rules. The numerical control information includes all the data necessary for machining, such as numerical values obtained from a design drawing and relating to the dimensions of the workpiece that is to be machined, feed speed, and the like. When machining the workpiece by means of an NC machine tool, the NC tape which has been prepared is fed into the tape reader of a numerical control device so that the various instructions recorded on the NC tape may be read successively, the numerical control device responding by executing the read instructions to cause the machine tool to machine the workpiece as prescribed. Since considerable time and experience is required to create the information stored on an NC tape, an apparatus for preparing an NC tape automatically has recently been developed and put into practical use. The apparatus includes a graphic display, keyboard and printer and is extremely useful in preparing NC tapes in a simple, accurate and rapid manner. Such an apparatus for automatically preparing NC tapes is constituted by a microcomputer with its internal main memory for storing the NC tape preparation software, or system program.

To create a machining program by means of the above-described apparatus, the prescribed system program is loaded into the main memory, and a so-called "part program" consisting of a group of data specifying the contour of a part, namely the path of a tool for cutting the contour, must be created and entered in accordance with predetermined rules. The preparation of such a part program is troublesome and time-consuming, and can only be accomplished by a programmer having considerable programming skill. With these difficulties in view, there has been a demand for a system capable of entering graphics simply by specifying a plurality of points on such graphics, and attention has turned to a graphic entering apparatus employing a tablet.

Such a graphic entering apparatus using a tablet can easily enter graphics even if the dimensions thereof are unknown. However, it has been troublesome to set and enter an NC data coordinate system. No NC data coordinate system can be established and entered particularly when a drawing is greater in size than the read-out area of a tablet with the reference point on the NC data coordinate system being located outside the read-out area.

The article "Paper menus and keyboards for digitizing tablets" in IBM TDB, Vol. 18, No. 5, October 1975, pages 1589—1592, discloses a method and apparatus in which graphics may be entered via a tablet by specifying a plurality of points on the graphics. The points are entered in terms of the coordinate system of the tablet and are transformed into terms of the coordinate system of the drawing (i.e. the NC data coordinate system). The origin of the NC data coordinate system lies inside the read-out area of the tablet.

US—A—4 042 866 discloses a method for preparing an NC tape in which a drawing is laid on a large input table and an index can be moved in the x and y directions across the table for use in entering into processor coordinates of points on the drawing. The origin of the drawing (i.e. the NC data coordinate system) again lies inside the area of the input table.

According to one aspect of the present invention there is provided a method of preparing an NC tape for a numerically controlled machine tool, wherein information concerning a figure on a drawing and required for preparing the NC tape is entered when the drawing is laid on the read-out area of an input plane, the figure being entered with a coordinate designating device by designating a plurality of points on the drawing, characterised in that:

the origin of the coordinate system of the drawing is outside the read-out area of the input plane, which is a tablet, and the coordinate system of the tablet and the drawing (i.e. the numerical control data) are at an angle to one another, the figure being entered employing the steps of:

designating a first point on the drawing with the coordinate designating device to enter the coordinates (xt, yt) of the first point with respect to the tablet coordinate system;

entering coordinates (xn, yn) of the first point on the numerical control data coordinate system through an input device to set a reference point of the numerical control data coordinate system;

designating a second point on a straight line passing through said first point and parallel to an X-axis or Y-axis of said numerical control data coordinate system to enter the coordinates (xt', yt') of the second point on the tablet coordinate system; and

entering the figure in terms of the numerical control data coordinate system by means of arbitrary points such as (xq, yq) in the tablet coordinate system by employing said first and second points and the coordinates on the tablet coordinate system, using the following coordinate transformation

$$\begin{pmatrix} xm \\ ym \end{pmatrix} = \begin{pmatrix} \cos\theta & \sin\theta \\ -\sin\theta & \cos\theta \end{pmatrix} \begin{pmatrix} xq \\ yq \end{pmatrix} + \begin{pmatrix} xn-xto \\ yn-yto \end{pmatrix}$$

where

**0 087 945**

$$\begin{pmatrix} xto \\ yto \end{pmatrix} = \begin{pmatrix} \cos\theta & \sin\theta \\ -\sin\theta & \cos\theta \end{pmatrix} \begin{pmatrix} xt \\ yt \end{pmatrix}$$

$$\cos\theta = (xt-xt')/\sqrt{(xt-xt')^2+(yt-yt')^2}$$

and

$$\sin\theta = (yt-yt')/\sqrt{(xt-xt')^2+(yt-yt')^2}$$

According to another aspect of the invention there is provided an apparatus for preparing an NC tape for a numerically controlled machine tool wherein information concerning a figure on a drawing and required for preparing the NC tape can be entered, the apparatus comprising: an input plane having a read-out area for placing the drawing thereon, and

a coordinate designating device for designating a plurality of points on the figure to enter coordinates thereof, the apparatus being characterised in that the input plane is a tablet for receiving a drawing with the drawing origin outside said read-out area, and the apparatus comprises:

a first register for storing the coordinates $(xt, yt)$ of a first point on the figure with respect to the tablet coordinate system;

a second register for storing the coordinates $(xt', yt')$ of a second point on the tablet coordinate system, which second point lies on a straight line passing through said first point and parallel to the X or Y axis of the numerical control data;

a third register for storing the coordinates $(xn, yn)$ of said first point with respect to the numerical control data coordinate system, the two coordinate systems being at an angle to one another;

a fourth register for storing the coordinates $(xq, yq)$ of a third point on the tablet coordinate system which are entered through said tablet; and

a coordinate transformation unit for effecting arithmetic operations of coordinate transformation on the coordinates of said third point to generate coordinates thereof on the numerical control data coordinate system, the coordinate transformation being

$$\begin{pmatrix} xm \\ ym \end{pmatrix} = \begin{pmatrix} \cos\theta & \sin\theta \\ -\sin\theta & \cos\theta \end{pmatrix} \begin{pmatrix} xq \\ yq \end{pmatrix} + \begin{pmatrix} xn-xto \\ yn-yto \end{pmatrix}$$

where

$$\begin{pmatrix} xto \\ yto \end{pmatrix} = \begin{pmatrix} \cos\theta & \sin\theta \\ -\sin\theta & \cos\theta \end{pmatrix} \begin{pmatrix} xt \\ yt \end{pmatrix}$$

$$\cos\theta = (xt-xt')/\sqrt{(xt-xt')^2+(yt-yt')^2}$$

and

$$\sin\theta = (yt-yt')/\sqrt{(xt-xt')^2+(yt-yt')^2}$$

An embodiment of the present invention may provide a method and apparatus capable of easily setting and entering an NC data coordinate system.

An embodiment of the present invention may further provide a method and apparatus capable of easily setting an NC data coordinate system even when no dimensions are known, and of setting and entering the reference point of an NC data coordinate system when the reference point is located outside the read-out area of a tablet.

The above and other features and advantages of an example of the present invention will become more apparent from the following description when taken in conjunction with the accompanying drawings in which a preferred embodiment of the present invention is shown by way of illustrative example.

Brief description of the drawings

Fig. 1 is a diagram illustrative of the principles of the present invention;

Fig. 2 is a block diagram of a system for reducing the present invention to practice;

Fig. 3 is a perspective view of the general features of a system for creating NC data;

Fig. 4 is a perspective view of a tablet input device in the system shown in Fig. 3; and

Fig. 5 is an enlarged, top view of a cursor unit included in the device of Fig. 4.

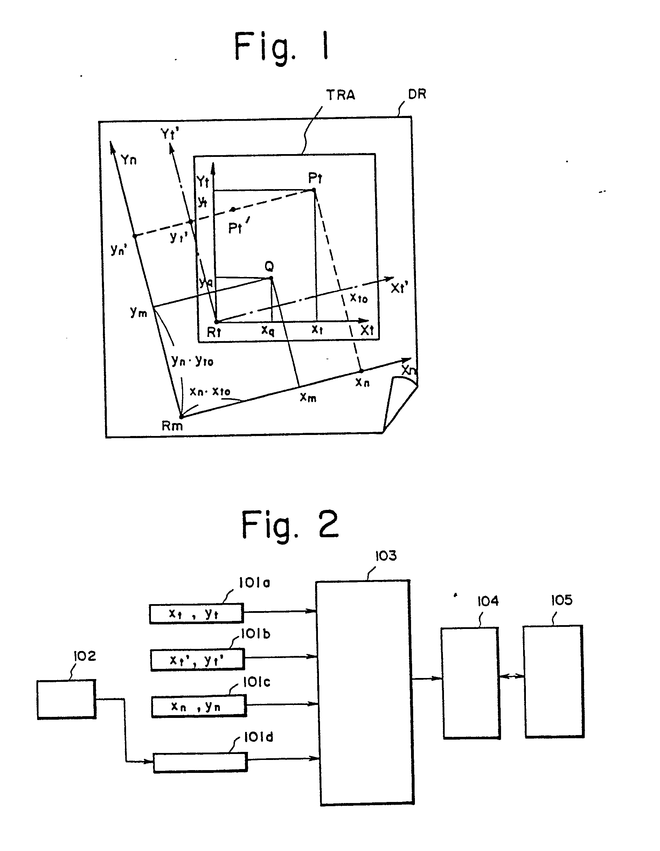

Fig. 1 is explanatory of operations of establishing an NC data coordinate system. First, the reference point Rm of the coordinate system is set up in the following order:

(a) A point Pt on a read-out area TRA and a drawing DR is designated by a coordinate designating device, and the coordinates $(xt, yt)$ thereof on a tablet coordinate system are entered;

(b) The coordinates $(xn, yn)$ of the designated point Pt on an NC data coordinate system are entered through a keyboard.

After the reference point of the NC data coordinate system has been determined by the foregoing steps (a) and (b), then coordinate axes are established in the following manner:

3

(a) Where the tablet coordinate system Xt−Yt and the NC data coordinate system Xn−Yn are in parallel relationship to each other, a key on the keyboard is depressed to indicate the fact that the both coordinate systems are parallel; or

(b) Where the coordinate systems Xt−Yt and Xn−Yn are not parallel to each other, a "+" or "−" key is depressed and then a point Pt' on a straight line passing through the point Pt parallel to the X-axis on the NC data coordinate system Xn−Yn in a direction dependent on the sign "+" or "−" is designated by the coordinate designating device to enter the coordinates (xt', yt') of the point Pt' on the tablet coordinate system.

The NC data coordinate system is thus set up by the foregoing procedure. Other processes than the above may be considered for setting coordinate axes. For example, a coordinate system can be established by designating a point on a straight line extending through the point Pt parallel to the Y-axis. Actuation of the "+" or "−" key may not necessarily be required.

After the NC data coordinate system has been set up, any arbitrary point Q on the drawing is designated by the coordinate designating device, and the coordinates (xq, yq) of the point Q on the tablet coordinate system can be converted into corresponding coordinates (xm, ym) on the NC data coordinate system through the following coordinate transformation:

$$\begin{pmatrix} xm \\ ym \end{pmatrix} = \begin{pmatrix} \cos\theta & \sin\theta \\ -\sin\theta & \cos\theta \end{pmatrix} \begin{pmatrix} xq \\ yq \end{pmatrix} + \begin{pmatrix} xn-xto \\ yn-yto \end{pmatrix} \tag{1}$$

where

$$\begin{pmatrix} xto \\ yto \end{pmatrix} = \begin{pmatrix} \cos\theta & \sin\theta \\ -\sin\theta & \cos\theta \end{pmatrix} \begin{pmatrix} xt \\ yt \end{pmatrix} \tag{2}$$

$$\cos\theta = (xt-xt')/\sqrt{(xt-xt')^2+(yt-yt')^2} \tag{3}$$

$$\sin\theta = (yt-yt')/\sqrt{(xt-xt')^2+(yt-yt')^2} \tag{4}$$

Fig. 2 is a block diagram of a system for reducimg the present invention to practice.

The apparatus includes a first register 101a for storing the coordinates (xt, yt) of the point Pt on the tablet coordinate system, a second register 101b for storing the coordinates (xt', yt') of the point Pt' on the tablet coordinate system, and a third register 101c for storing the coordinates (xn, yn) of the point Pt on the NC data coordinate system. When the coordinates xq, yq of the point Q (Fig. 1) on the tablet coordinate system is entered from a tablet input device 102 into a fourth register 101d, a coordinate transformation unit 103 effects the arithmetic operations defined by the equations (1) and (2) to generate coordinate values xm, ym on the NC data coordinate system. An NC data creating unit 104 employs the coordinate values xm, ym to generate NC data which are then stored in a data memory 105.

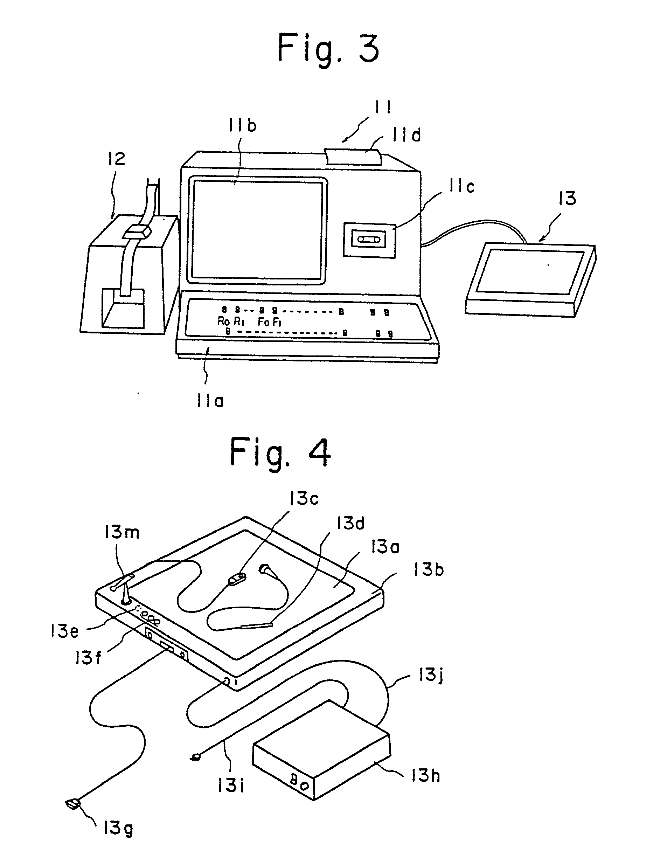

Fig. 3 is a perspective view of a system for creating NC data in which a method of setting a coordinate system of the present invention can be incorporated. The system includes the main body 11 of an apparatus for creating NC data. The main body 1 comprises a keyboard 11a having a multiplicity of keys, a graphic display device 11b, a magnetic tape unit 11c, a printer 11d, and a control unit, not shown. The latter is constituted by a microcomputer which executes processing for the input and output of information, for digitizing and for the creation of NC data, all executed by means of the tablet described hereinbelow, based on a system program stored previously in memory means such as a ROM (read-only memory). The multiplicity of keys provided on the keyboard 11a are used by the operator for instructing operations to be performed through conversational interaction, for designating system program loading, and for entering NC data. The graphic display device 11b displays, in graphical form, coordinate values obtained by digitization of positions designated by the tablet, as well as input, numerical values, NC data and various messages or prompts for conversational interaction with the operator. The magnetic tape unit 11c is used to enter a system program into the main body of the NC data creating apparatus 11. By way of example, when using a tablet to enter coordinate values directly from a drawing and prepare NC data, the software (system program) for digitizing processing must be fed into the main body 11. This is done by loading the digitizing program from a magnetic tape cassette set in the magnetic tape unit 11c into the main body 11. To read the tape into the system, the operator need only touch a load button on the keyboard 11a after the tape cassette has been set in the magnetic tape unit 11c. The printer 11d is adapted to print out characters which appear on the screen of the graphic display device 11b, data punched in a paper tape, described later, and information which hs been written into the loaded magnetic tape. The system also includes a paper tape reader/puncher 12 for preparing an NC tape by punching a paper tape with perforations indicative of the NC data prepared by the main body 11, and for reading NC or other data which has already been punched into an NC tape. The system tablet, designated at 13, comprises a board which uses the principle of electromagnetic induction to enter data. By relying upon a coordinate designating device such as a cursor unit or stylus pen as means for designating coordinates, the tablet 13 is operable to input

# 0 087 945

positional coordinates from a drawing laid on the tablet surface, these coordinates being fed into the main body 11 as an input thereto. The system tablet 13 corresponds to the tablet input device 102 shown in Fig. 2.

Fig. 4 shows in perspective the tablet 13 in greater detail. The tablet 13 comprises a tablet main body or board 13a, a tablet cover 13b, a cursor unit 13c, a stylus pen 13d, a buzzer 13e, a group of lamps 13f indicating, e.g., coordinate input mode and introduction of power, an input/output connector 13g for connecting the tablet 13 to the main body 11, a power unit 13h for supplying the table body 13a with D.C. power, an A.C. cable 13i, a D.C. cable 13j for connection between the tablet body and power unit, and a pen stand 13m for holding the stylus pen 13 when not in use. The cursor unit 13c or stylus pen 13d is used to enter coordinate and other data.

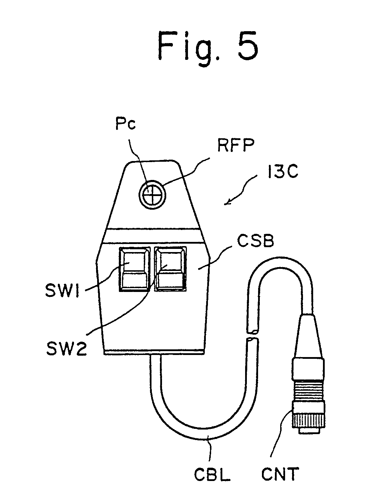

The details of the cursor unit 13c are illustrated in the enlarged view of Fig. 5, in which a top view of the cursor unit is shown. The cursor unit 13c has a main body CSB, first and second switches SW1, SW2, a position reader RFP, a connector CNT and a cable CBL leading from the connector CNT to the main body CSB. To enter the coordinates of a point, the intersection Pc of the cross hairs provided on the position reader RFP is aligned with the desired point on a drawing laid on the tablet body, followed by depressing the first switch SW1 or the second switch SW2.

According to the present embodiment of the invention, the reference point of an NC data coordinate system can easily be established, and it can be set up and entered even when the reference point is located outside the read-out area of the tablet.

Although a certain preferred embodiment has been shown and described, it should be understood that many changes and modifications may be made therein without departing from the scope of the appended claims.

In general terms, a figure on a drawing DR placed on the read-out area TRA of a tablet is entered with a coordinate designating device by designating a plurality of points on the drawing, and at the same time a coordinate system of the figure is set and entered. To carry out the above coordinate setting, a first point Pt on the drawing DR is designated by the coordinate designating device to enter the coordinates of the first point Pt on a tablet coordinate system Xt−Yt, and coordinates of the designated first point Pt on an NC data coordinate system Xn−Yn are entered through a keyboard to set a reference point of the NC data coordinate system. A second point Pt' on a straight line passing through the first point Pt parallel to an X-axis or Y-axis of the NC data coordinate system Xn−Yn is designated by the coordinate designating device to enter the coordinates of the second point Pt' on the tablet coordinate system. The NC data coordinate system can be set and entered by employing the first and second points and the coordinates on the tablet coordinate system. An embodiment of the present invention may provide a method and apparatus for effecting the foregoing coordinate setting process. The reference point of the NC data coordinate system can easily be established, and it can be set and entered even when the reference point is located outside the read-out area of the tablet.

## Claims

1. A method of preparing an NC tape for a numerically controlled machine tool, wherein information concerning a figure on a drawing (DR) and required for preparing the NC tape is entered when the drawing (DR) is laid on the read-out area of an input plane, the figure being entered with a coordinate designating device (13c) by designating a plurality of points on the drawing (DR), characterised in that:

the origin (Rm) of the coordinate system of the drawing (DR) is outside the read-out area of the input plane, which is a tablet (TRA), and the coordinate system of the tablet (TRA) and the drawing (DR) (i.e. the numerical control data) are at an angle (θ) to one another, the figure being entered employing the steps of:

designating a first point (Pt) on the drawing with the coordinate designating device (13c) to enter the coordinates (xt, yt) of the first point (Pt) with respect to the tablet coordinate system;

entering coordinates (xn, yn) of the first point (Pt) on the numerical control data coordinate system through an input device (11a) to set a reference point of the numerical control data coordinate system;

designating a second point (Pt') on a straight line passing through said first point (Pt) and parallel to an X-axis or Y-axis of said numerical control data coordinate system to enter the coordinates (xt', yt') of the second point on the tablet coordinate system; and

entering the figure in terms of the numerical control data coordinate system by means of arbitrary points such as Q (xq, yq) in the tablet coordinate system by employing said first and second points (Pt, Pt') and the coordinates on the tablet coordinate system, using the following coordinate transformation

$$\begin{pmatrix} xm \\ ym \end{pmatrix} = \begin{pmatrix} \cos\theta & \sin\theta \\ -\sin\theta & \cos\theta \end{pmatrix} \begin{pmatrix} xq \\ yq \end{pmatrix} + \begin{pmatrix} xn-xto \\ yn-yto \end{pmatrix}$$

where

$$\begin{pmatrix} xto \\ yto \end{pmatrix} = \begin{pmatrix} \cos\theta & \sin\theta \\ -\sin\theta & \cos\theta \end{pmatrix} \begin{pmatrix} xt \\ yt \end{pmatrix}$$

5

and

$$\cos\theta=(xt-xt')/\sqrt{(xt-xt')^2+(yt-yt')^2}$$

$$\sin\theta=(yt-yt')/\sqrt{(xt-xt')^2+(yt-yt')^2}$$

2. An apparatus for preparing an NC tape for a numerically controlled machine tool wherein information concerning a figure on a drawing (DR) and required for preparing the NC tape can be entered, the apparatus comprising: an input plane having a read-out area for placing the drawing (DR) thereon, and

a coordinate designating device (13c) for designating a plurality of points on the figure to enter coordinates thereof, the apparatus being characterised in that the input plane is a tablet (TRA) for receiving a drawing (DR) with the drawing origin (Rm) outside said read-out area, and the apparatus comprises

a first register (101a) for storing the coordinates (xt, yt) of a first point (Pt) on the figure with respect to the tablet coordinate system;

a second register (101b) for storing the coordinates (xt', yt') of a second point Pt' on the tablet coordinate system, which second point lies on a straight line passing through said first point (Pt) and parallel to the X or Y axis of the numerical control data;

a third register (101c) for storing the coordinates (xn, yn) of said first point with respect to the numerical control data coordinate system, the two coordinate systems being at an angle ($\theta$) to one another;

a fourth register (101d) for storing the coordinates, (xq, yq) of a third point Q on the tablet coordinate system which are entered through said tablet; and

a coordinate transformation unit (103) for effecting arithmetic operations of coordinate transformation on the coordinates of said third point (Q) to generate coordinates thereof on the numerical control data coordinate system, the coordinate transformation being

$$\begin{pmatrix} xm \\ ym \end{pmatrix} = \begin{pmatrix} \cos\theta & \sin\theta \\ -\sin\theta & \cos\theta \end{pmatrix}\begin{pmatrix} xq \\ yq \end{pmatrix} + \begin{pmatrix} xn-xto \\ yn-yto \end{pmatrix}$$

where

$$\begin{pmatrix} xto \\ yto \end{pmatrix} = \begin{pmatrix} \cos\theta & \sin\theta \\ -\sin\theta & \cos\theta \end{pmatrix}\begin{pmatrix} xt \\ yt \end{pmatrix}$$

and

$$\cos\theta=(xt-xt')/\sqrt{(xt-xt')^2+(yt-yt')^2}$$

$$\sin\theta=(yt-yt')/\sqrt{(xt-xt')^2+(yt-yt')^2}$$

3. An apparatus according to claim 2, further including a unit (104) for creating numerical control data from the coordinates of said last-mentioned coordinates generated by said coordinate transformation unit (103), and a memory (105) for storing said numerical control data.

**Patentansprüche**

1. Verfahren zur Anfertigung eines NC-Bandes für eine numerisch gesteuerte Werkzeugmaschine, bei dem Informationen, die eine Figur einer Zeichnung (DR) betreffen und für die Anfertigung des NC-Bandes benötigt werden, eingegeben werden, wenn die Zeichnung (DR) auf den Lesebereich einer Eingabefläche gelegt ist, wobei die Figur durch das Markieren einer Mehrzahl von Punkten auf der Zeichnung (DR) mit Hilfe einer Koordinatenbestimmungseinrichtung (13) eingegeben wird, dadurch gekennzeichnet, daß der Ursprung (Rm) des Koordinatensystems der Zeichnung (DR) außerhalb des Lesebereichs der von einem Digitalisierungstablett (TRA) gebildeten Eingabefläche liegt und das Koordinatensystem des ·Tabletts (TRA) einerseits und das der Zeichnung (DR) (d.h. der numerischen Steuerdaten) andererseits einen Winkel ($\theta$) miteinander bilden und daß die Figur unter Anwendung folgender Verfahrensschritte eingegeben wird:

zur Eingabe der Koordinaten (xt, yt) eines ersten Punkts (Pt) der Zeichnung (DR) bezüglich des Koordinatensystems des Tabletts wird dieser erste Punkt (Pt) mit Hilfe der Koordinatenbestimmungseinrichtung (13c) markiert,

zum Setzen eines Referenzpunkts des Koordinatensystems der numerischen Steuerdaten werden über eine Eingabevorrichtung (11a) Koordinaten (xn, yn) des ersten Punkts (Pt) bezüglich des Koordinatensystems der numerischen Steuerdaten eingegeben,

es wird ein zweiter Punkt (Pt') markiert, der auf einer durch den ersten Punkt (Pt) und parallel zu einer X- oder Y-Achse des Koordinatensystems der numerischen Steuerdaten verlaufenden geraden Linie liegt, um die Koordinaten (xt', yt') dieses zweitens Punkts bezüglich des Koordinatensystems des Tabletts einzugeben,

die Figur wird in Termen des Koordinatensystems der numerischen Steuerdaten mittels beliebiger Punkte (z.B. Q (xq, yq)) in dem Koordinatensystem des Tabletts eingegeben, indem der erste und der zweite Punkt (Pt, Pt') und die Koordinaten bezüglich des Koordinatensystems des Tabletts verwendet und folgende Koordinatentransformation durchgeführt wird:

$$\begin{pmatrix} xm \\ ym \end{pmatrix} = \begin{pmatrix} \cos\theta & \sin\theta \\ -\sin\theta & \cos\theta \end{pmatrix} \begin{pmatrix} xq \\ yq \end{pmatrix} + \begin{pmatrix} xn - xto \\ yn - yto \end{pmatrix}$$

worin

$$\begin{pmatrix} xto \\ yto \end{pmatrix} = \begin{pmatrix} \cos\theta & \sin\theta \\ -\sin\theta & \cos\theta \end{pmatrix} \begin{pmatrix} xt \\ yt \end{pmatrix}$$

und

$$\cos\theta = (xt - xt')/\sqrt{(xt - xt')^2 + (yt - yt')^2}$$

$$\sin\theta = (yt - yt')/\sqrt{(xt - xt')^2 + (yt - yt')^2}$$

bedeuten.

2. Gerät zur Anfertigung eines NC-Bandes für ein numerisch gesteuerte Werkzeugmaschine, bei dem Informationen, die eine Figur einer Zeichnung (DR) betreffen und für die Anfertigung des NC-Bandes benötigt werden, eingegeben werden können,

mit einer Eingabefläche mit einem Lesebereich, auf dem die Zeichnung (DR) plazierbar ist,

sowie mit einer Koordinatenbestimmungseinrichtung (13c) zur Markierung einer Mehrzahl von Punkten der Figur für die Eingabe von deren Koordinaten dadurch gekennzeichnet,

daß die genannte Eingabefläche ein Tablett (TRA) zum Aufnehmen einer Zeichnung (DR) ist, wobei der Koordinatenursprung (Rm) der Zeichnung (DR) außerhalb des genannten Lesebereichs liegt,

und daß das Gerät ferner folgende Teile umfaßt:

ein erstes Register (101a) zur Speicherung der Koordinaten (xt, yt) eines ersten Punkts (PT) der Figur bezüglich des Koordinatensystems des Tabletts,

ein zweites Register (101b) zur Speicherung der Koordinaten (xt', yt') eines zweiten Punkts (Pt') bezüglich des Koordinatensystems des Tabletts, wobei dieser zweite Punkt auf einer durch den ersten Punkt (Pt) und parallel zu einer X- oder Y-Achse des Koordinatensystems der numerischen Steuerdaten verlaufenden geraden Linie liegt,

ein drittes Register (101c) zur Speicherung der Koordinaten (xn, yn) des ersten Punkts bezüglich des Koordinatensystems der numerischen Steuerdaten, wobei die beiden Koordinatensysteme einen Winkel (θ) miteinander bilden,

ein viertes Register (101d) zur Speicherung der Koordinaten (xq, yq) eines dritten Punkts (Q) bezüglich des Koordinatensystems des Tabletts, die mit Hilfe dieses Tabletts eingegeben werden,

und eine Koordinatentransformationseinheit (103) zur Durchführung arithmetischer Operationen zur Koordinatentransformation der Koordinaten des genannten dritten Punkts (Q) und zur Erzeugung von dessen Koordinaten bezüglich des Koordinatensystems der numerischen Steuerdaten, wobei die Koordinatentransformation folgende Form hat:

$$\begin{pmatrix} xm \\ ym \end{pmatrix} = \begin{pmatrix} \cos\theta & \sin\theta \\ -\sin\theta & \cos\theta \end{pmatrix} \begin{pmatrix} xq \\ yq \end{pmatrix} + \begin{pmatrix} xn - xto \\ yn - yto \end{pmatrix}$$

worin

$$\begin{pmatrix} xto \\ yto \end{pmatrix} = \begin{pmatrix} \cos\theta & \sin\theta \\ -\sin\theta & \cos\theta \end{pmatrix} \begin{pmatrix} xt \\ yt \end{pmatrix}$$

und

$$\cos\theta = (xt - xt')/\sqrt{(xt - xt')^2 + (yt - yt')^2}$$

$$\sin\theta = (yt - yt')/\sqrt{(xt - xt')^2 + (yt - yt')^2}$$

bedeuten.

3. Gerät nach Anspruch 2,

mit einer Einheit (104) zur Erzeugung numerischer Steuerdaten aus den von der Koordinatentransformationseinheit (103) generierten Koordinaten,

sowie mit einem Speicher (105) zur Speicherung dieser numerischen Steuerdaten.

**Revendications**

1. Une méthode de préparation d'une bande Nc pour machine-outil à commande numérique, dans laquelle les informations concernant une figure d'un dessin (DR) et nécessaires à la préparation de la bande NC sont entrées quand le dessin (DR) est posé sur la surface de lecture d'un plan d'entrée, la figure étant entrée au moyen d'un dispositif à désigner des coordonnées (13c) en désignant une pluralité de points du dessin (DR), caractérisée en ce que:

l'origine (Rm) du système de coordonnées du dessin (DR) est située en dehors de la zone de lecture du plan d'entrée, qui est une tablette (TRA), et que le système de coordonnées de la tablette (TRA) et le dessin (DR) (c'est-à-dire les données de commande numérique) font un angle θ entre eux, la figure étant entrée au moyen des opérations de:

désignation d'un premier point (Pt) du dessin au moyen du dispositif à désigner les coordonnées (13c) pour entrer les coordonnées (xt, yt) du premier point (Pt) par rapport au système de coordonnées de la tablette;

entrée des coordonnées (xn, yn) du premier point (Pt) dans le système de coordonnées des données de commande numérique au moyen d'un dispositif d'entrée (11a) pour définir un point de référence du système de coordonnées des données de commande numérique;

désignation d'un second point (Pt') sur une droite passant par ledit premier point (Pt) et parallèle à un axe X ou à un axe Y dudit système de coordonnées des données de commande numérique pour entrer les coordonnées (xt', yt') du second point dans le système de coordonnées de la tablette; et

entrée de la figure par rapport au système de coordonnées des données de commande numérique au moyen de points arbitraires tels que Q (xq, yq) dans le système des coordonnées de la tablette en employant lesdits premier et second points (Pt, Pt') et les coordonnées dans le système des coordonnées de la tablette, en utilisant la transformation de coordonnées suivante:

$$\begin{pmatrix} xm \\ ym \end{pmatrix} = \begin{pmatrix} \cos\theta & \sin\theta \\ -\sin\theta & \cos\theta \end{pmatrix} \begin{pmatrix} xq \\ yq \end{pmatrix} + \begin{pmatrix} xn-xto \\ yn-yto \end{pmatrix}$$

où

$$\begin{pmatrix} xto \\ yto \end{pmatrix} = \begin{pmatrix} \cos\theta & \sin\theta \\ -\sin\theta & \cos\theta \end{pmatrix} \begin{pmatrix} xt \\ yt \end{pmatrix}$$

$$\cos\theta = (xt-xt')/\sqrt{(xt-xt')^2+(yt-yt')^2}$$

et

$$\sin\theta = (yt-yt')/\sqrt{(xt-xt')^2+(yt-yt')^2}$$

2. Un appareil de préparation d'une bande NC pour machine-outil à commande numérique dans lequel les informations concernant une figure d'un dessin (DR) et nécessaires à la préparation de la bande NC peuvent être entrées, l'appareil comprenant: un plan d'entrée ayant une surface de lecture destinée à supporter le dessin (DR), et

un dispositif à désigner les coordonnées (13c) pour désigner une pluralité de points de la figure et un entrer les coordonnées, l'appareil étant caractérisé en ce que le plan d'entrée est une tablette (TRA) destinée à supporter un dessin (DR), l'origine du dessin (Rm) étant à l'extérieur de ladite surface de lecture, et en ce que l'appareil comprend:

un premier registre (101a) pour stocker les coordonnées (xt, yt) d'un premier point (Pt) de la figure dans le système de coordonnées de la tablette;

un second registre (101b) pour stocker les coordonnées (xt', yt') d'un second point (Pt') dans le système des coordonnées de la tablette, lequel second point se trouve sur une droite passant par ledit premier point (Pt) et parallèle à l'axe X ou à l'axe Y des données de commande numérique;

un troisième registre (101c) pour stocker les coordonnées (xn, yn) dudit premier point par rapport au système de coordonnées des données NC, les deux systèmes coordonnées faisant entre eux an angle (θ);

un quatrième registre (101d) pour stocker les coordonnées (xq, yq) d'un troisième point Q dans le système des coordonnées de la tablette, lesquelles sont entrées au moyen de ladite tablette; et

une unité de transformation des coordonnées (103) pour effectuer des opérations arithmétiques de transformation des coordonnées sur les coordonnées dudit troisième point (Q) et générer les coordonnées de ce point dans le système des coordonnées des données de commande numérique, la transformation des coordonnées étant:

$$\begin{pmatrix} xm \\ ym \end{pmatrix} = \begin{pmatrix} \cos\theta & \sin\theta \\ -\sin\theta & \cos\theta \end{pmatrix} \begin{pmatrix} xq \\ yq \end{pmatrix} + \begin{pmatrix} xn-xto \\ yn-yto \end{pmatrix}$$

où

$$\begin{pmatrix} xto \\ yto \end{pmatrix} = \begin{pmatrix} \cos\theta & \sin\theta \\ -\sin\theta & \cos\theta \end{pmatrix} \begin{pmatrix} xt \\ yt \end{pmatrix}$$

**0 087 945**

$$\cos\theta=(xt-xt')/\sqrt{(xt-xt')^2+(yt-yt')^2}$$

et

$$\sin\theta=(yt-yt')/\sqrt{(xt-xt')^2+(yt-yt')^2}$$

3. Un appareil selon la revendication 2, comprenant encore une unité (104) pour créer des données de commande numérique à partir desdites dernières coordonnées mentionnées générées par ladite unité de transformation de coordonnées (103) et une mémoire (105) pour stocker lesdites coordonnées de commande numérique.

9

0 087 945

# Fig. 1

# Fig. 2

1

# Fig. 3

# Fig. 4

# Fig. 5